**Europäisches Patentamt**

**European Patent Office**

**Office européen des brevets**

(19)

(11) Veröffentlichungsnummer : **0 284 606 B2**

(12) # NEUE EUROPÄISCHE PATENTSCHRIFT

(45) Veröffentlichungstag der neuen Patentschrift :
**30.09.92 Patentblatt 92/40**

(51) Int. Cl.$^5$ : **F02D 41/26, G06F 1/00**

(21) Anmeldenummer : **86905227.4**

(22) Anmeldetag : **19.09.86**

(86) Internationale Anmeldenummer :
**PCT/DE86/00379**

(87) Internationale Veröffentlichungsnummer :
**WO 87/04758 13.08.87 Gazette 87/18**

(54) **VORRICHTUNG ZUM RÜCKSETZEN VON RECHENEINRICHTUNGEN.**

(30) Priorität : **01.02.86 DE 3603082**

(43) Veröffentlichungstag der Anmeldung :
**05.10.88 Patentblatt 88/40**

(45) Bekanntmachung des Hinweises auf die
Patenterteilung :
**27.12.89 Patentblatt 89/52**

(45) Bekanntmachung des Hinweises auf die
Entscheidung über den Einspruch :
**30.09.92 Patentblatt 92/40**

(84) Benannte Vertragsstaaten :
**DE FR GB IT**

(56) Entgegenhaltungen :
**EP-A- 0 127 789**
**DE-A- 3 423 404**
**FR-A- 2 566 147**
**GB-A- 2 120 417**

(73) Patentinhaber : **ROBERT BOSCH GMBH**
**Postfach 30 02 20**
**W-7000 Stuttgart 30 (DE)**

(72) Erfinder : **HEMMINGER, Hermann**
**Wettegasse 6**
**W-7145 Markgröningen (DE)**
Erfinder : **JOOS, Eugen**
**Lugaufstrasse 23**
**W-7149 Freiberg (DE)**
Erfinder : **JUNDT, Werner**
**Belschnerstrasse 24**
**W-7140 Ludwigsburg (DE)**
Erfinder : **WERNER, Peter**
**Im Sommerrain 15**
**W-7135 Wiernsheim (DE)**

EP 0 284 606 B2

## Beschreibung

Stand der Technik

Die Erfindung geht aus von einer Vorrichtung zum Rücksetzen von Recheneinrichtungen, Mikroprozessoren (µC), Einzweckrechnern, Speichern u. dgl. nach dem ersten Teil des Anspruchs 1.

Bei einer bekannten Regeleinrichtung dieser Art für eine Brennkraftmaschine unter Verwendung eines Mikroprozessors (EP-A-0 127 789) sind Rücksetzmittel vorgesehen, die sowohl auf Spannungsstörungen reagieren und den Mikroprozessor rücksetzen, als auch bei erstmaligem Starten der Brennkraftmaschine über ein Zündrelais ein Spannungssignal empfangen und selbst ein Rücksetzsignal erzeugen, welches vor Beginn des Regelvorgangs den vorhandenen Mikroprozessor rücksetzt. Diese Rücksetzung erfolgt auch dann, wenn an dem Mikroprozessor als Recheneinrichtung für die Regelung der Brennkraftmaschine noch für eine vorgegebene Zeit Versorgungsspannung anliegt, was für die Aufrechterhaltung flüchtiger Daten wünschenswert ist. Zur Erzeugung des Rücksetzimpulses wird daher die Änderung des Schaltzustands einer mit dem Zündschloßschalter des Kraftfahrzeugs verbundenen Anschlußklemme verwendet.

Bei einer weiteren automatischen Regeleinrichtung für die Zuführung von Kraftstoff zu einer Brennkraftmaschine während des Startvorgangs ist es ferner bekannt, die verwendete Recheneinrichtung durch Erzeugung eines geeigneten Rücksetzsignals dann zurückzusetzen, wenn die Brennkraftmaschine sich in einem Betriebszustand nach dem Anlaßvorgang befindet.

Im einzelnen ist hierfür ein Speicher vorgesehen, der eine Angabe über die Drehzahl der Brennkraftmaschine während des Anlassens enthält. Der Ausgang dieses Speichers ist zusammen mit dem Ausgang eines Registers mit einem Vergleicher verbunden, wobei das Register einen Drehzahlwert enthält, der sich ergibt, wenn die Brennkraftmaschine nach dem Startvorgang, also ohne Anlaßhilfe, frei dreht. Durch den Vergleicher wird daher festgestellt, ob der Inhalt des Registers tatsächlich größer als der Speicherinhalt für die Anlaßdrehzahl ist; trifft dies zu, wird einem nachgeschalteten UND-Gatter ein Signal zugeführt, woraufhin über ein Differenzierglied ein Rücksetzsignal erzeugt und u. a. einem Zähler und Dekoder zugeführt wird. Das UND-Gatter spricht dabei dann auf den Impuls vom Vergleicher an, läßt diesen als durch, wenn es vom Anlaßschalter wirksam geschaltet ist.

Allgemein ist es beim Rücksetzen von Recheneinrichtungen, Mikroprozessoren u. dgl. bekannt (US-PS-4 296 338), ein im wesentlichen sofort reagierendes Rücksetzsignal dann zu erzeugen, wenn die Versorgungsspannung für die Recheneinrichtung oder das Gerät unter einen vorgegebenen Referenzwert abfällt. Zusätzlich hierzu wird ein äußerer Kondensator entladen und ein zweites Rücksetzsignal (Reset-Signal) so lange erzeugt, bis der Kondensator einen vorgegebenen Ladezustand wieder erreicht hat. Hierdurch wird dem Taktoszillator des Mikroprozessors hinreichend Zeit gegeben, sich zu stabilisieren.

Es ist ferner bekannt (DE-OS'en 3 035 896 und 3 119 117), zwar beim Einschalten eines Mikroprozessors einen Rücksetzimpuls zu erzeugen, so daß dieser in einen definierten Anfangszustand zurückgesetzt wird. Problematisch ist jedoch, daß Rücksetzimpulse nicht erzeugt werden, wenn beispielsweise durch Spannungseinbrüche der Rechner in einen undefinierten Zustand gelangt und nicht mehr weiterarbeiten kann oder wenn bei einem beim Einschalten des Mikroprozessors ergehenden Rücksetzimpuls zu diesem Zeitpunkt der Taktgenerator des Mikroprozessors noch nicht angeschwungen ist.

Bei einer besonderen Ausbildungsform eines einem Kraftstoffzumeß- oder -einspritzsystem zugeordneten Mikroprozessors ist vorgesehen, daß dieser seine Spannungsversorgung selbst, beispielsweise über ein Relais abzuschalten hat, also auch nach Abstellen und Ausschalten des mit der Anlage betriebenen Kraftfahrzeugs sichergestellt ist, daß µCgesteuerte Systeme im Kraftfahrzeug, etwa Einspritzanlagen, noch für einige Zeit arbeiten können und sich anschließend selbst abschalten (beispielsweise Freibrennen bei der sogenannten LH-Jetronic). Bei solchen µC-gesteuerten Systemen bei Kraftfahrzeugen, in welchen Bereich auch die vorliegende Erfindung gehört, genügt es nicht, wie bei den bekannten Schaltungen, sicherzustellen, daß dem Mikroprozessor ein Reset-Impuls dann zugeführt wird, wenn die Stromversorgung gestört oder unterbrochen worden ist oder erst dann, wenn der Taktoszillator des Mikroprozessors schon angeschwungen ist. Fehlfunktionen des Mikroprozessors (beispielsweise ein undelinierter Programmablauf) können auch bei Versagen der üblicherweise vorhandenen µC-Überwachung (sogenannter Watchdog) auftreten und sind, da sich das Gerät, jedenfalls die Recheneinrichtung auch nach Abschalten auch selbst noch mit Spannung versorgt, in der üblichen Weise nicht zu begegnen.

Der Erfindung liegt daher die Aufgabe zugrunde, bei einem solchen µC-gesteuerten (Einspritz)System, welches seine Spannungsversorgung selbst etwa über ein Relais abzuschalten hat, dafür zu sorgen, daß bei auftretenden Fehlfunktionen beliebiger Art oder beliebiger Ursache sicher resetiert werden kann.

Vorteile der Erfindung

Die Erfindung löst diese Aufgabe mit den kennzeichnenden Merkmalen des Hauptanspruchs und hat den Vorteil, daß, obwohl das µCgesteuerte System im Abschaltfall seine Spannungsversorgung beibehält, sich also im Grunde gar nicht abschalten läßt, dennoch im Fehlerfall ein Rücksetzen möglich ist. Hierdurch wird es beispielsweise dem Fahrer eines Kraftfahrzeugs ermöglicht, bei Störungen im Programmablauf, die auftreten können, wenn trotz der µC-Überwachungsschaltung (Watchdog) während des Fahrbetriebs ein undefinierter Programmablauf eintritt, durch Neustart Normalbedingungen wieder herzustellen. Bei solchen Störungen im Programmablauf kann mit Sicherheit angenommen werden, daß das Fahrzeug unruhig läuft bzw. der Motor abstirbt, so daß die Erfindung dem Fahrer, der sich durch einen Neustart durch Betätigen des Zündschloßschalters bemühen wird, das Fahrzeug wieder in Gang zu setzen, sozusagen entgegenkommt und durch diese Maßnahme auch das Resetieren des Mikroprozessors oder der Recheneinrichtung bewirkt. Lediglich durch einen solchen Neustart gelingt es daher, wieder auf Normalbetrieb zu gehen.

Die Erfindung eignet sich auch für solche µCgesteuerten Systeme, bei denen infolge einer Störung beliebiger Ursache und Einwirkung ein undefinierter Programmablauf eingetreten ist, der auch ein undefiniertes Ansteuern aller µCAusgänge bewirkt, auch des Ausgangs für das Hauptrelais. Es ist daher möglich, daß selbst bei gewolltem Ausschalten des Fahrzeugs etwa bei solchen µC-gesteuerten Systemen, bei denen sich hierdurch auch ein Ausschalten des Mikroprozessors selbst ergibt, diese Möglichkeit durch den Mikroprozessor selbst verhindert wird, das System also nicht abgeschaltet werden kann. In diesem Falle wäre ein Wiederstarten ebenfalls nicht möglich, da der sogenannte Impuls Power on reset" nicht ausgelöst werden kann.

Von Vorteil ist weiterhin, daß durch die eine integrierende Differenzierung einer positiven Flanke bewirkenden Erfindung, wobei der auszuwertende Schaltimpuls für das Reset durch das Betätigen des Zündschlößschalters ergeht, sichergestellt ist, daß der Reset-Impuls nur einmal erzeugt wird und auf Störungen, die negative oder positive Spannungsspitzen, Spannungseinbrüche auf 0 V oder lange Spannungsüberhöhungen sein können, nicht reagiert wird.

Durch die in den Unteransprüchen aufgeführten Maßnahmen sind vorteilhafte Weiterbildungen und Verbesserungen der im Hauptanspruch angegebenen Reset-Schaltung möglich.

Zeichnung

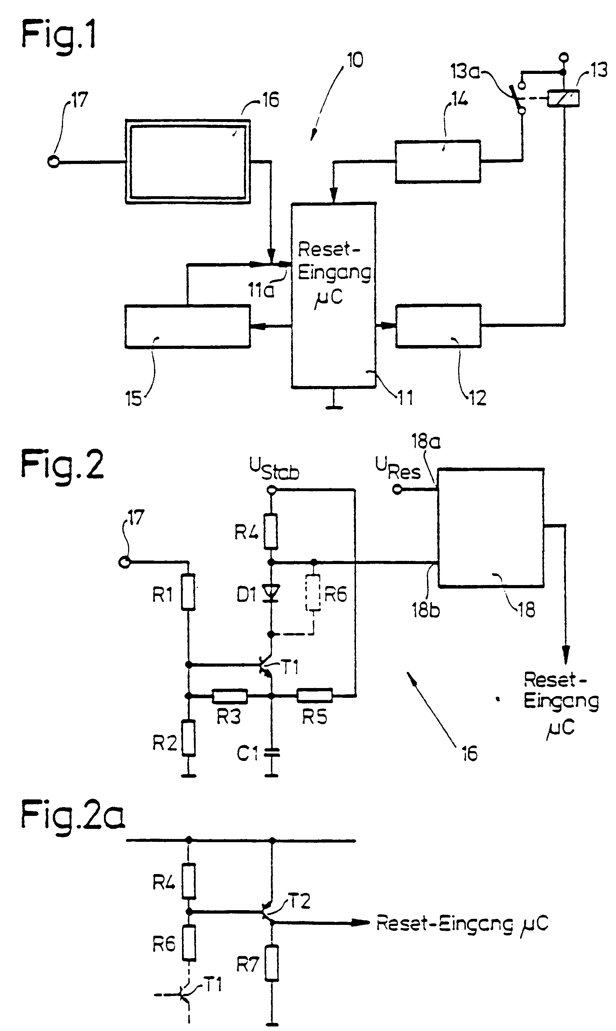

Ein Ausführungsbeispiel der Erfindung ist in der Zeichnung dargestellt und wird in der nachfolgenden Beschreibung näher erläutert. Es zeigen Fig. 1 ein Gesamtblockbilddarstellung einer Recheneinrichtung, vorzugsweise eines Mikroprozessors (µC) mit zugeordneten äußeren Schaltstufen, die es dem Prozessor auch ermöglichen, seine Spannungsversorgung selbst über ein Relais abzuschalten, und Fig. 2 in detaillierter Darstellung die den Reset-Impuls erzeugende Schaltung, die Fig. 2a zeigt als Ausschnitt eine Variante in der Ausbildung eines Vergleichers.

Beschreibung der Ausführungsbeispiele

Die in Fig. 1 gezeigte Recheneinrichtung 10 umfaßt den eigentlichen Mikrocomputer oder Mikroprozessor 11, der über eine einem seiner Ausgänge zugeordneten Schaltstufe 12 und ein außerhalb oder innerhalb angebrachtes Relais 13 (sogenanntes Hauptrelais) in der Lage ist, die an ihm über eine Spannungsstabilisierung 14 anliegende Versorgungsspannung (hier Batteriespannung $U_{Batt}$) nach eigenem Ermessen abzuschalten, je nach den Erfordernissen, die von dem Mikroprozessor bei der Ansteuerung bestimmter Kraftfahrzeugsysteme (beispielsweise Kraftstoffeinspritzanlage, Zündzeitpunktregler, Steuerung für Automatikgetriebe u.dgl.) gestellt werden. Der Mikroprozessor 11 ist daher in der Lage, für eine bestimmte Zeit, die beispielsweise bei der sogenannten LH-JetronicKraftstoffeinspritzanlage einem Freibrennen dienen kann oder die Erledigung sonstiger abschließender Aufgaben ermöglicht, seine Versorgungsspannung über den Selbsthaltekreis aus Schaltstufe 12, Hauptrelais 13 mit Relaiskontakt 13a und Spannungsstabilisierungsschaltung 14 noch aufrechtzuerhalten und dann die Versorgungsspannung zum Hauptrelais 13 durch entsprechende Ansteuerung der Schaltstufe 12 zu unterbrechen, wodurch durch Abfall des Relais 13 der Relaiskontakt 13a geöffnet und die Spannungsversorgung $U_{Batt}$ vom System insgesamt weggeschaltet wird.

Üblicherweise zugeordnet ist dem Mikroprozessor 11 ein eigenes Überwachungssystem 15, welches als sogenannter Watchdog bezeichnet werden kann und welches die ordnungsgemäße Funktion des Mikroprozessors 11 überwacht und dem Reset-Eingang 11a einen Rücksetzimpuls dann zuführt, wenn die Watchdog-Schaltung 15 selbst ein irreguläres Verhalten feststellt.

Bei µC-gesteuerten Systemen besteht aber die Möglichkeit, daß trotz der µC-Überwachungsschaltung 15 während des Fahrbetriebs durch Störungen ein undefinierter Programmablauf auftritt, der sich auch so auswirken kann, daß es zu einem undefinierten Ansteuern aller μC-Ausgänge kommt, auch des Ausgangs, über welchen der Mikroprozessor 11 die Schaltstufe 12 und damit das Hauptrelais ansteuert. Dadurch kann selbst bei gewolltem Ausschalten des mit einer solchen Recheneinrichtung betriebenen Fahrzeugs ein Ausschalten des Systems unterbleiben, wobei dann auch ein Wiederstarten nicht möglich ist, da nicht der sogenannte "Power on reset"-Impuls ausgelöst werden kann. Mit anderen Worten, es besteht bei Recheneinrichtungen und Mikroprozessoren die Gefahr, daß im Fehlerfalle das System dann nicht abschaltbar ist, wenn dieses in der Lage ist, für seine eigene Spannungsversorgung ein Hauptrelais anzusteuern.

Die Erfindung sieht daher einen Schaltungsblock 16 vor, der parallel auf den Reset-Eingang 11a des Mikroprozessors 11 wirkt und sicherstellen kann, daß ein Reset-Impuls beim Betrieb eines Kraftfahrzeugs mit diesem System auch dann erzeugt werden kann, wenn der Mikroprozessor selbst weiterhin an Spannung liegt und auch an dieser Spannungsversorgung bleibt, also sich nicht die an sich naheliegende Lösung anbietet, einfach durch Abschalten des Fahrzeugs auch dem Mikroprozessor die Versorgungsspannung wegzuschalten und dann automatisch beim Wiedereinschalten durch den sogenannten Power on Reset-Impuls den Mikroprozessor gleichzeitig wieder einzuschalten und rückzusetzen.

Zu diesem Zweck wertet der Reset-Schaltungsblock 16 die Spannungsänderungen am Zündschloßschalter, üblicherweise also an der im Fachgebrauch mit Klemme 15 bezeichneten Anschluß eines Kraftfahrzeugs aus. Diese Klemme ist mit 17 bezeichnet und liefert jedenfalls dann immer eine positive Anstiegsflanke, wenn der Fahrer bei Störungen im Programmablauf das Fahrzeug zunächst abschaltet und anschließend einen Neustart versucht. Hierdurch gelangt an die Klemme 17 ein positiver Spannungssprung, der durch eine integrierende Auswertung in einen Reset-Impuls für den Mikroprozessor 11 umgewandelt wird.

Im einzelnen umfaßt der Reset-Schaltungs-block 16 einen Komparator 18, an dessen einem Eingang eine Referenzspannung Uref anliegt und dessen anderem Eingang eine variable Spannung zugeführt wird, die sich aus dem Verhalten noch zu erläuternder Schaltungskomponenten ergibt, wenn der Zündschlößschalter Klemme 15 eingeschaltet wird. Der Komparator 18 gibt an seinem Ausgang immer dann ein Rücksetzsignal ab und führt dies dem Reset-Eingang des Mikroprozessors 11 zu, wenn die an seinem anderen Eingang 18b (der Referenzspannungseingang ist mit 18a bezeichnet) anliegende Spannung die Referenzspannung auch nur kurzeitig unterschreitet - es versteht sich, daß hier auch die umgekehrten Bedingungen vorgegeben werden können, je nach Ausbildung der Schaltung und der Polarität der verwendeten Schaltungselemente.

Die mit dem Eingang 18b verbundenen Schaltungselemente zur Umwandlung und Auswertung des Zündschlößschalter-Flankensprungs umfassen die Reihenschaltung eines Widerstandes R4 mit einem Halbleiter-Schaltelement, nämlich Transistor T1, dessen Emitter über einen Kondensator C1 mit Masse oder negativer Versorgungsspannung verbunden ist. Zwischen den Widerstand R4 und den Kollektoranschluß des Transistors T1 kann noch eine in positiver Richtung leitende Diode geschaltet sein, die aber auch entfallen oder durch einen gestrichelt angedeuteten Widerstand R6 parallel zur Diode D1 ersetzt werden kann. Der Widerstand R4 liegt an stabilisierter Versorgungsspannung Ustab und der Verbindungspunkt von Widerstand R4 mit Kollektor des Transistors T1 bzw. der Diode D1 liegt an dem mit einem entsprechend variablen Signal beaufschlagten Eingang 18b des Komparators 18. Im Basiskreis des Transistors T1 ist die Reihenschaltung eines Widerstandes R1 mit einem Widerstand R2 gegen Masse geschaltet, wobei der Verbindungspunkt dieser beiden Widerstände mit der Basis des Transistors T1 verbunden ist und gleichzeitig über eiren weiteren Widerstand R3 an den Emitter des Transistors T1 angeschlossen ist, der ferner über einen Widerstand R5 ebenfalls mit der Versorgungsspannung verbunden ist.

Diese Schaltung bewirkt eine integrierende Differenzierung der sich an 17, also dem Klemmanschluß des Zündschlößschalters ergebenden positiven beim Wiedereinschalten (Wiederstarten) des Fahrzeugs.

Die Funktion der Schaltung ist dabei wie folgt. Bei ausgeschaltetem Zündschloßschalter liegt an dem Anschluß 17 Nullpotential oder Minuspotential, es liegt jedoch voraussetzungsgemäß am System die Versorgungsspannung $U_{Batt}$ bzw. von dieser abgeleitet die stabilisierte Spannung Ustab an. Daher befindet sich der Teilerpunkt der Widerstände R2 und R1 annähernd auf Massepotential und der Kondensator C1 ist auf die Spannung entladen, die sich aufgrund der Teilerwirkung über die Reihenschaltung der Widerstände R5, R3 und R2 parallel zu R1 gegen Masse ergibt. Bei diesem Schaltungszustand (also ausgeschalteter Fahrzeugklemme 15) ist der Transistor T1 gesperrt, da sein Basispotential notwendigerweise niedriger ist als sein Emitterpotential und über den Widerstand R4 liegt praktisch die Spannung Ustab am Eingang 18b des Komparators, also eine höhere Spannung als die Referenzspannung Uref.

Um den gewünschten Reset-Impuls auslösen zu können, startet der Fahrzeugführer das Fahrzeug wieder, betätigt also auf jeden Fall den Zündschloßschalter, so daß an Klemme 15 (Eingang 17) eine positive Spannung angelegt wird und der Teilerpunkt der Widerstände R1 und R2 auf das gegebene Teilerverhältnis in der Spannung ansteigt, welches zur Auslösung notwendigerweise über der Anfangsspannung des Kondensators C1 (gleichzeitig Emitterpotential des Transistors T1) liegt. Dadurch schaltet der Transistor T1 durch und zieht das Potential am Widerstand R4 unter die Referenzspannung - der Komparator 18 schaltet und die Auslösung des

ResetImpulses erfolgt. Gleichzeitig wird hierdurch über die Kollektor-Emitter-Strecke (und auch die Basis-Emitter-Strecke) des Transistors T1 der Kondensator C1 auf das jetzt geänderte Teilerpotential der Widerstände R5, R3 aufgeladen, wobei der Transistor T1 dann sperrt (Reset-Impuls ist beendet) sobald die notwendige Basis-Emitter-Spannung zum Durchschalten hierbei unterschritten wird.

Dieser Zustand ändert sich auch nicht mehr, wenn das positive Potential am Anschluß 17 erhalten bleibt, denn über den Widerstand R3 fließt auf jeden Fall ein Strom vom Spannungsanschluß bei entsprechend aufgeladenem Kondensator C1 über den Widerstand R2 gegen Masse, der- die Basis-EmitterStrecke des Transistors T1 in Sperrichtung vorspannt.

Eine solche die positive Einschaltflanke am Zündschloßschalter integrierend differenzierende Reset-Schaltung entspricht auch den folgenden Anforderungen zur Auslösung eines Reset-Impulses:

– Bei Einschalten des Systems darf ebenfalls ausgelöst werden, wobei der sogenannte Power on reset-Impuls dominiert;

– die Auslösung erfolgt nur bei einem eine Ausschaltung und ein anschließendes Einschalten an der Klemme 15 des Zündschlößschalters bewirkenden Schaltzyklus, wobei die Stellung 0 des Zündschlößschalters der "AUS"-Stellung entspricht, bei der der Anschluß 17 stromlos ist und die Stellung 1 oder 2 des Zündschlößschalters auch die Anlasserbetätigung des Kraftfahrzeugs umfassen kann.

Ferner kann die Schaltung durch entsprechende Vorgabe der Auslöseschwellen durch die Teilerverhältnisse von R1/R2 sowie R5/R3 sowie der Dimensionierungen des Kondensators C1 mit R4 sowohl die Zeitdauer des Reset-Impulses bestimmen als auch sicherstellen, daß die Auslösung zur Störunterdrückung an folgende Bedingungen geknüpft sein kann:

– Eine beliebig lange abgefallene Spannung an der Zündschloßklemme 15 auf z.B. >6 V darf bei Wiederanstieg auf beliebig höhere Spannungen keine Auslösung zur Folge haben, da auch im Fahrbetrieb mögliche Spannungseinbrüche nicht auszuschließen sind;

– beim Einschalten der "Klemme 15", also positiver Spannungsanstieg am Anschluß 17, darf erst ein Hub von z.B. >8 V die Auslösung bewirken;

– positive und negative Störspitzen bzw. kurze Spannungseinbrüche sowie HF-Einstrahlungen dürfen keine Auslösung zur Folge haben.

Daher ergibt sich bei vorliegender Schaltung das folgende Verhalten bei Störungen. Treten kurze Spannungseinbrüche beispielsweise bis auf 0 V und negative Spannungsspitzen auf, dann sinkt zwar am Teilerpunkt der Widerstände R1 und R2 die Spannung kurzzeitig ab, über den Widerstand R3 wird der Kondensator C1 jedoch nur langsam entladen; ist der Einbruch daher kurz, also die Entladung klein, dann kann der Transistor T1 bei Wiederanstieg der Spannung am Anschluß 17 zwar eventuell durchschalten, er vermag jedoch infolge der verbliebenen hohen Restladung am Kondensator C1 den Widerstand R4 nicht unter die Referenzspannung zu ziehen.

Treten positive Spannungsspitzen bzw. lange Spannungsüberhöhungen auf, dann steigt am Teilerpunkt der Widerstände R1 und R2 zwar die Spannung an, so daß der Transistor T1 leitend wird, durch das schon hochliegende Potential am Kondensator C1, kann jedoch der Widerstand R4 nicht unter die Referenzspannung gezogen werden, d.h. der vom leitend geschalteten Transistor T1 noch gezogene mögliche Strom ist nicht groß genug, um den erforderlichen Spannungsabfall am Widerstand R4, der die Referenzspannung Uref unterschreiten könnte, zu erzeugen.

Grundsätzlich ist eine differenzierende oder integrierende Auswertung des vom Zündschloßschalter kommenden Impulses möglich; das Ausführungsbeispiel Fig. 2, welches eine integrierende Flankenauswertung betrifft, ist störsicher, so daß diese Möglichkeit bevorzugtist.

Unter dem Begriff der integrierenden Differenzierung zur Auswertung des Zündschloßschalter-Impulses ist grundsätzlich jede beliebige Flankenauswertung zu verstehen, bei der ein normalerweise durch Differenzierung erzeugter Impuls gewonnen wird, der hier durch ein Integrationsverhalten der Schaltung erzeugt wird.

Ferner wird darauf hingewiesen, daß der in Fig. 2 vorgesehene Vergleicher 18 als Schaltungselement im weitesten Sinne zu verstehen ist und beispielsweise auch als, wie in Fig. 2a gezeigt, einfache Schaltstufe realisiert werden kann, wobei ein dem Eingangstransistor T1 nachgeschalteter weiterer, hier als PNP-Transistor ausgebildeter Transistor T2 vorgesehen und mit seinem Emitteranschluß unmittelbar an der stabilisierten Versorgungsspannung Ustab und mit seinem Kollektor über einen weiteren Widerstand R7 gegen Masse geschaltet ist. Hierdurch ergibt sich eine hinreichende Schwellwirkung bei Ansteuerung des PNP-Transistors T2 vom Verbindungspunkt der Widerstände R4 und R6, so daß der sich am Kollektor des Transistors T2 ergebende Impuls dem Reset-Eingang 11a des Mikroprozessors zu dessen Resetierung zugeführt werden kann.

## Patentansprüche

1. Vorrichtung zum Rücksetzen von Recheneinrichtungen, Mikroprozessoren (μ C), Einzweckrechnern, Speichern u. dgl., die nach Abschalten selbsttätig noch für vorgegebene Zeit an Versorgungsspannung liegen, insbesondere für von Mikroprozessoren gesteuerte Einrichtungen zur Kraftstoffdosierung, Kraftstoffeinspritzung, Zündzeitpunkteinstellung, Abgasratenrückführung u. dgl. bei Kraftfahrzeugen, wobei unabhängig von der Versorgungsspannung und daher auch bei an der Recheneinrichtung (Mikroprozessor 11) noch anliegender Versorgungsspannung die Änderung des Schaltzustands einer mit dem Zündschloßschalter des Kraftfahrzeugs verbundenen Anschlußklemme zur Erzeugung des Rücksetzimpulses und Zuführung zum Rücksetzeingang der Recheneinrichtung ausgenutzt wird, dadurch gekennzeichnet, daß Mittel vorgesehen sind, die die Änderung des Schaltzustands des Zündschloßschalters (Klemme 15) beim Einschalten durch Integrierung auswerten, mit der Maßgabe, daß der vom Zündschloßschalter ausgelöste Rücksefzimpuls im eingeschwungenen Zustand verschwindet.

2. Vorrichtung nach Anspruch 1, dadurch gekennzeichnet, daß eine Flankenauswertung des vom Zündschloßschalter (Klemme 15) kommenden Einschaltimpulses durch integrierende Flankenauswertung vorgenommen wird.

3. Vorrichtung nach Anspruch 2, dadurch gekennzeichnet, daß der durch integrierende Differenzierung gewonnene Einschaltimpuls des Zündschloßschalters an einem Vergleicher (Komparator 18) mit einem Bezugswert (Referenzspannung Uref) verglichen wird.

4. Vorrichtung nach Anspruch 2 oder 3, dadurch gekennzeichnet, daß zur integrierenden Differenzierung die (positive) Flanke beim Einschalten des Zündschlößschalters durch Aufsteuerung eines Halbleiterschaltelementrs (Transistor T1 ) die Ladung eines Kondensators (C1) mit einem solchen Strom bewirkt, daß dieser in Form eines wieder abklingenden Spannungsabfalls an einen Widerstand (R4) als variables Signal dem Referenzwert (Uref) am Vergleicher entgegengeschaltet einen Reset-Impuls am Ausgang des Vergleichers bildet.

5. Vorrichtung nach Anspruch 3 und 4, dadurch gekennzeichnet, daß dem einen Eingang (18a) des Vergleichers (18) ein Referenzwert (Uref) vorgegebener Größe und dem anderen Eingang (18b) das durch integrierende Differenzierung der positiven Einschaltflanke gewonnene variable Signal zugeführt ist, wobei an diesem Eingang (18b) die Reihenschaltung eines Widerstandes (R4) mit dem von der positiven Flanke durchsteuerbaren Transistors (T1) und eines Kondensators (C1) anliegt.

6. Vorrichtung nach Anspruch 5, dadurch gekennzeichnet, daß im Basiskreis des Transistors (T1) die Teilerschaltung zweier Widerstände (R1, R2) liegt, mit Verbindung des Basisanschlusses mit dem Teilerpunkt und daß der Teilerpunkt der Eingangswiderstände (R1, R2) gleichzeitig über einen weiteren Widerstand (R3) mit dem Emitteranschluß des Transistors (T1) verbunden ist, von welchem der Kondensator (C1) gegen Masse geschaltet ist und ein weiterer Widerstand (R5) zur Versorgungsspannung (Ustab) abgeht, derart, daß bei eingehender positiver Flanke vom Zündschlößschalter (Anschluß 17) der Transistor (T1) zunächst leitend schaltet, den Kondensator (C1) an seinem Emitteranschluß auf lädt und hierbei gleichzeitig die Spannung am Verbindungspunkt Kollektor Widerstand (R4) zur Reset-Impulsauslösung unter die Referenzspannung (Uref) am Komparator (18) zieht, mit anschließender Sperrung des Transistors bei Anstieg des Kondensatorpotentials über die an der Basis des Transistors anliegenden Teilerspannung.

7. Vorrichtung nach Anspruch 5 oder 6, dadurch gekennzeichnet, daß der Vergleicher eine bei Erreichen eines vorgegebenen Schwellenwerts des vom Eingangstransistors (T1) stammenden Signals durchsteuerbare Schaltstufe aus einem Halbleiterschaltelement (PNP-Transistor T2) ist.

## Claims

1. Device for resetting computer equipment, microprocessors (μC), single-purpose computers, memories and the like that automatically remain connected to supply voltage for a given time after disconnection, in particular for microprocessor-controlled equipment for fuel metering, fuel injection, ignition point setting, exhaust gas recirculation metering and the like in motor vehicles, the change of the switching condition of a terminal connected to the ignition switch of the motor vehicle being utilized for generating the reset pulse and supplying it to the reset input of the computer equipment irrespective of the supply voltage and hence also when supply voltage is still applied to the computer equipment (microprocessor 11), characterized in that means are provided which evaluate the change in the switching condition of the ignition switch (terminal 15) when switching on by integration, on the condition that the reset pulse triggered by the ignition switch disappears in the steady-state condition.

2. Device according to Claim 1, characterized in that an edge evaluation of the switch-on pulse coming from the ignition switch (terminal 15) is carried out by integrating edge evaluation.

3. Device according to Claim 2, characterized in that the switch-on pulse of the ignition switch obtained by integrating differentiation is compared at a comparator (comparator 18) to a reference value (reference voltage Uref).

4. Device according to Claim 2 or 3, characterized in that, for integrating differentiation, when the ignition switch is switched on the (positive) edge effects the charging of a capacitor (C1), by controlling a semiconductor switching element (transistor T1), with such a current that this forms, in the form of an again decaying voltage drop at a resistor (R4) as variable signal switched against the reference value (Uref) at the comparator, a reset pulse at the output of the comparator.

5. Device according to Claim 3 and 4, characterized in that there is supplied to one input (18a) of the comparator (18) a reference value (Uref) of given size and to the other input (18b) the variable signal obtained by integrating differentiation of the positive switch-on edge, this input (18b) being connected to the series circuit of a resistor (R4) with the transistor (T1) which can be driven by the positive edge and of a capacitor (C1).

6. Device according to Claim 5, characterized in that there lies in the base circuit of the transistor (T1) the divider circuit of two resistors (R1, R2), with connection of the base terminal to the dividing point, and in that the dividing point of the input resistors (R1, R2) is at the same time connected via a further resistor (R3) to the emitter terminal of the transistor (T1), of which the capacitor (C1) is connected to earth and a further resistor (R5) goes off to the supply voltage (Ustab), in such a manner that in the case of a positive edge arriving from the ignition switch (terminal 17) the transistor (T1) first switches to conductive, charges the capacitor (C1) at its emitter terminal and in the process simultaneously pulls the voltage at the connection point of collector and resistor (R4) under the reference voltage (Uref) at the comparator (18) for the purpose of triggering the reset pulse, with subsequent disabling of the transistor when the capacitor potential rises above the divider voltage applied at the base of the transistor.

7. Device according to Claim 5 or 6, characterized in that the comparator is a switching stage which is driveable when a given threshold value of the signal originating at the input transistor (T1) is reached, and is composed of a semiconductor switching element (p-n-p transistor T2).

## Revendications

1.- Dispositif pour la remise à l'état initial d'installations de calcul, de microprocesseurs (μC), de calculateurs à une seule fin, de mémoires, et d'autres équipements, qui après déconnexion restent automatiquement encore pour un temps prédéfini, à la tension d'alimentation, notamment, pour des installations commandées par microprocesseurs pour le dosage de carburant, l'injection de carburant, le réglage de l'instant d'allumage, le recyclage des gaz d'échappement, etc... dans des véhicules automobiles, auquel cas indépendamment de la tension d'alimentation et en conséquence, également, dans le cas où la tension d'alimentation est encore appliquée à l'installation de calcul (microprocesseur 11), la modification de l'état de commutation d'une borne de raccordement reliée au commutateur d'allumage du véhicule automobile, est utilisée pour produire l'impulsion de remise à l'état initial et pour l'appliquer à l'entrée de remise à l'état initial de l'installation de calcul, dispositif caractérisé en ce qu'il est prévu des moyens qui exploitent par intégration, la modification de l'état de commutation du commutateur d'allumage (borne 15) lors de l'enclenchement, avec cette caractéristique que l'impulsion de remise à l'état initial, déclenchée par le commutateur d'allumage disparait à l'état permanent.

2.- Dispositif selon la revendication 1, caractérisé en ce qu'une exploitation des flancs de l'impulsion d'enclenchement en provenance du commutateur d'allumage (borne 15) s'effectue par exploitation intégrante des flancs.

3.- Dispositif selon la revendication 2, caractérisé en ce que l'impulsion d'enclenchement du commutateur d'allumage obtenue par différenciation intégrante est comparée dans un comparateur (18) avec une valeur de référence (tension de référence $U_{ref}$).

4.- Dispositif selon la revendication 2 ou 3, caractérisé en ce que, pour la différenciation intégrante, le flanc (positif) lors de l'enclenchement du commutateur d'allumage, provoque par commande d'un élément de commutation semi-conducteur (transistor T1) la charge d'un condensateur (C1) avec un courant tel que celui-ci, sous la forme d'une chute de tension décroissant à nouveau, sur une résistance (R4), est opposé en tant que signal variable à la valeur de référence ($U_{ref}$) dans le comparateur et engendre une impulsion de remise à l'état initial à la sortie de ce comparateur.

5.- Dispositif selon les revendications 3 et 4, caractérisé en ce qu'à l'une (18a) des entrées du comparateur (18) est appliquée une valeur de référence ($U_{ref}$) de grandeurs prédéfinies, tandis qu'à l'autre entrée (18b) est appliqué le signal variable obtenu par différenciation intégrante du flanc positif d'enclenchement, tandis qu'à cette entrée (18b) s'applique le montage en série d'une résistance (R4) avec le transistor (T1) susceptible d'être rendu passant par le flanc positif et un condensateur (C1).

6.- Dispositif selon la revendication 5, caractérisé en ce que dans le circuit de base du transistor (T1) est placé un circuit diviseur à deux résistances (R1, R2), le raccordement de la base étant relié au point diviseur de ces deux résistances, et ce point diviseur des résistances d'entrée (R1, R2) étant relié simultanément par l'intermédiaire d'une autre résistance (R3) au raccordement émetteur du transistor (T1), à partir duquel le condensateur (C1) est branché à la masse, tandis qu'une autre résistance (R5) part vers la tension d'alimentation ($U_{stab}$), de sorte que lors de l'entrée d'un flanc positif en provenance du commutateur d'allumage (raccordement 17), le transistor (T1) devient tout d'abord conducteur, le condensateur (C1) se charge à son raccordement d'émetteur, et, dans ce cas, simultanément, la tension au point de jonction collecteur-résistance (R4) passe au-dessous de la tension de référence ($U_{ref}$) dans le comparateur (18) pour permettre le déclenchement de l'impulsion de remise à l'état initial, avec ensuite blocage du transistor lorsque le potentiel du condensateur s'élève au-dessus de la tension du diviseur s'appliquant à la base du transistor.

7.- Dispositif selon la revendication 5 ou 6, caractérisé en ce que le comparateur est un étage de commutation constitué d'un élément de commutation à semi-conducteurs (transistor PNP T2) susceptible d'être rendu passant lorsqu'est atteinte une valeur de seuil prédéfinie du signal en provenance du transistor d'entrée (T1).

# Fig.1

# Fig.2

Reset-
Eingang
µC

# Fig.2a

R4

R6

T1

T2

R7

Reset-Eingang µC